# EUROPEAN PATENT APPLICATION

(11) **EP 1 219 488 A2**
(43) Date of publication of application: **03.07.2002**
(21) Application number: 01130715.4
(22) Date of filing: 21.12.2001
(51) Int. Cl.: B60K 6/04, F02D 41/14, F02D 35/00

(54) **Air-fuel ratio control in a hybrid vehicle**

(30) Priority: 27.12.2000 JP 2000398662
(71) Applicant: TOYOTA JIDOSHA KABUSHIKI KAISHA, Aichi-ken 471-8571 (JP)
(72) Inventor: Igarashi, Kohei, Toyota-shi, Aichi-ken 471-8571 (JP); Sasaki, Shizuo, Toyota-shi, Aichi-ken 471-8571 (JP); Murata, Hiroki, Toyota-shi, Aichi-ken 471-8571 (JP)
(74) Representative: Leson, Thomas Johannes Alois, Dipl.-Ing.

(57) **Abstract**

There is provided a control device for controlling an engine operation such that the engine is operated at a predetermined fuel consumption in accordance with a requested output. The engine comprises an electric motor and an exhaust gas purification catalyst. When an air fuel ratio of an exhaust gas should be made rich to restore an ability of purification of the catalyst, the device controls the motor operation such that the air fuel ratio of the exhaust gas is made rich while the engine output is caused to be decreased and the shortage of the engine output relative to the requested output is supplemented by the motor output to totally output the requested output.

## Description

### BACKGROUND OF THE INVENTION

### 1. Field of the Invention

The present invention relates to a control device of an engine.

### 2. Description of the Related Art

A so called hybrid engine is known. In the hybrid engine, a requested output is obtained by combining an output of an internal combustion engine and an output of an electric motor. Further, in the hybrid engine, in order to purify components, for example, a nitrogen oxide (hereinafter referred to as NOₓ) included in an exhaust gas discharged from the engine, it is known that a NOₓ purification catalyst is arranged in an engine exhaust passage. In case that the NOₓ purification catalyst is a type of a catalyst which absorbs the NOₓ included in the exhaust gas in an oxidative atmosphere, and which releases the absorbed NOₓ when the air fuel ratio of the exhaust gas becomes stoichiometric or rich, it is necessary to release the absorbed NOₓ from the NOₓ purification catalyst at a certain time before an amount of the NOₓ absorbed in the NOₓ purification catalyst exceeds the upper limit of the amount of the NOₓ which the NOₓ purification catalyst can absorb.

According to the Japanese Unexamined Patent Publication No. 11-62653, in the hybrid engine, a rich spike is performed to temporarily make an air fuel ratio of the internal combustion engine rich relative to a stoichiometric air fuel ratio when the NOₓ should be released from the NOₓ purification catalyst and, thus, make an air fuel ratio of the exhaust gas flowing into the NOₓ purification catalyst rich.

If the rich spike is performed according to the above mentioned Publication, it is necessary to temporarily inject an excess fuel from a fuel injector. This is not preferred in view of maintaining fuel consumption small. Generally, this is not preferred in the case that it is necessary to make the air fuel ratio of the exhaust gas rich in order to restore an ability of purification of an exhaust gas purification catalyst for purifying components included in the exhaust gas.

An object of the present invention is to restore the ability of purification of the exhaust gas purification catalyst while maintaining the fuel consumption small.

### SUMMARY OF THE INVENTION

To accomplish the above object, in the first invention, there is provided a control device for controlling an operation of an engine such that the engine is operated at a predetermined fuel consumption in accordance with a requested output, the engine comprising an electric motor and an exhaust gas purification catalyst arranged in an exhaust passage of the engine for purifying components included in an exhaust gas, wherein when the engine is operated at a predetermined fuel consumption and the output of the engine dose not reach a requested output, the control device controls an operation of the electric motor such that the shortage of the output of the engine relative to the requested output is supplemented by an output of the electric motor to totally output the requested output and on the other hand, when the engine is operated at a predetermined fuel consumption and the output of the engine exceeds the requested output, the control device controls the operation of the electric motor such that the excess output of the engine relative to the requested output is stored as an electric power to totally output the requested output, and further when an air fuel ratio of an exhaust gas should be made rich to restore an ability of purification of the catalyst, the control device controls the operation of the electric motor such that the air fuel ratio of the exhaust gas is made rich while the output of the engine is caused to be decreased and the shortage of the output of the engine relative to the requested output is supplemented by the output of the electric motor to totally output the requested output.

In the second invention according to the first invention, when the air fuel ratio of the exhaust gas should be made rich to restore the ability of purification of the catalyst, the control device controls the operation of the engine such that the operation of the engine is stopped just after the output of the engine is caused to be decreased and, shortly thereafter, the air fuel ratio of the exhaust gas is made rich.

In the third invention according to the first invention, the catalyst comprises a NOₓ absorbent which absorbs a NOₓ included in the exhaust gas if the air fuel ratio of the exhaust gas flowing into the catalyst is lean and which releases the absorbed NOₓ if the air fuel ratio of the exhaust gas flowing into the catalyst becomes stoichiometric or rich.

### BRIEF DESCRIPTION OF THE DRAWINGS

The present invention may be more fully understood from the description of the preferred embodiments of the invention set forth below together with the accompanying drawings, in which:
Fig. 1 is a general view of a hybrid engine;
Fig. 2 is a side sectional view of an engine body;
Fig. 3 is a general view of another embodiment of the hybrid engine;
Fig. 4 is a view of showing a smallest fuel consumption curve;
Fig. 5 is a flowchart of controlling the engine body and electric motor;
Figs. 6A and 6B are view of maps for calculating an absorbed NOₓ amount; and
Fig. 7 is a flowchart of calculating the absorbed NOₓ amount.

### DESCRIPTION OF THE PREFERRED EMBODIMENTS

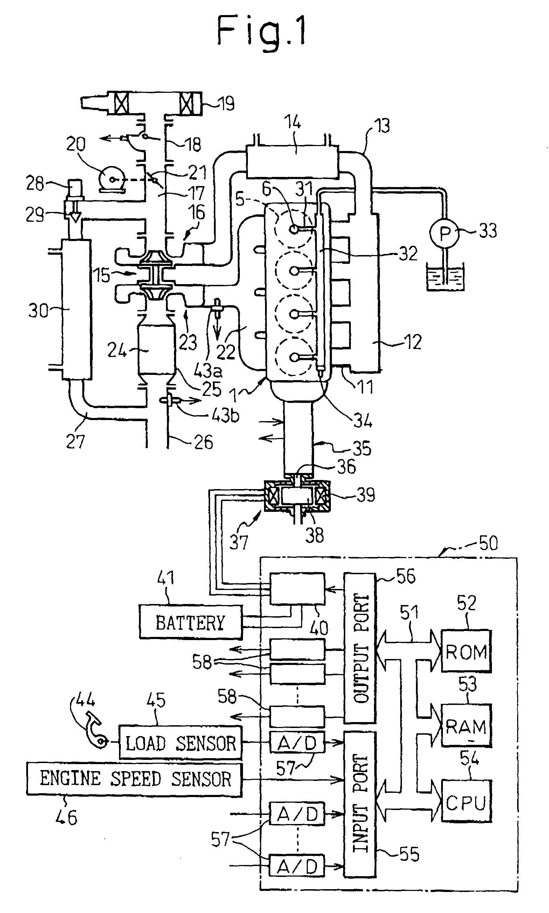

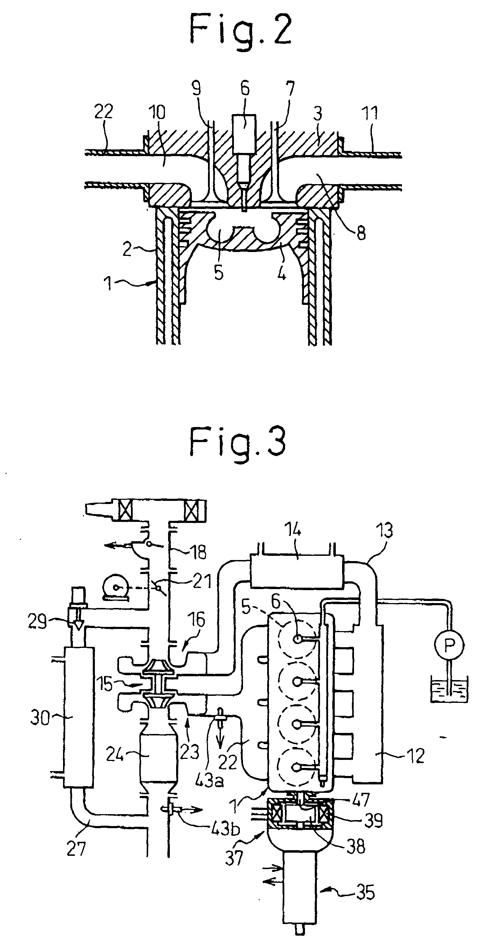

Figs. 1 and 2 show the case of application of the present invention to a four-stroke compression ignition type engine.

Referring to Figs. 1 and 2, 1 shows an engine body, 2 a cylinder block, 3 a cylinder head, 4 a piston, 5 a combustion chamber, 6 an electrically controlled fuel injector, 7 an intake valve, 8 an intake port, 9 an exhaust valve, and 10 an exhaust port. The intake port 8 is connected through a corresponding intake branch tube 11 to a surge tank 12. The surge tank 12 is connected through an intake duct 13 and an intercooler 14 to an outlet of a compressor 16 of a supercharger, for example, an exhaust turbocharger 15. An inlet of the compressor 16 is connected through an intake duct 17 and an air flow meter 18 to an air cleaner 19. A throttle valve 21 driven by a stepping motor 20 is arranged in the intake duct 17.

On the other hand, the exhaust port 10 is connected through an exhaust manifold 22 to an inlet of an exhaust turbine 23 of the exhaust turbocharger 15. The outlet of the exhaust turbine 23 is connected to a casing 25 housing a NOₓ purification catalyst 24. An exhaust pipe 26 connected to the outlet of the casing 25 and the intake duct 17 downstream of the throttle valve 21 are connected to each other through an EGR passage 27. Inside the EGR passage 27 is arranged an EGR control valve 29 driven by a stepping motor 28. Further, inside the EGR passage 27 is arranged an intercooler 30 for cooling the EGR gas flowing inside the EGR passage 27. In the embodiment shown in Fig. 1, the engine cooling water is led inside the intercooler 30 where the EGR gas is cooled by the engine cooling water.

On the other hand, each fuel injector 6 is connected through a fuel supply tube 31 to the reservoir, that is, a common rail 32. Fuel is supplied to the common rail 32 from an electrically controlled variable discharge fuel pump 33. Fuel supplied in the common rail 32 is supplied through each fuel supply tube 31 to the fuel injectors 6. A fuel pressure sensor 34 for detecting the fuel pressure in the common rail 32 is attached to the common rail 32. The amount of discharge of the fuel pump 33 is controlled based on the output signal of the fuel pressure sensor 34 so that the fuel pressure in the common rail 32 becomes the target fuel pressure.

On the other hand, in the embodiment shown in Fig. 1, a transmission 35 is connected to the output shaft of the engine. An electric motor 37 is connected to the output shaft 36 of the transmission 35. In this case, as the transmission 35, it is possible to use an ordinary automatic transmission provided with a torque converter, various types of variable speed transmissions, or an automatic transmission of a type enabling automatic clutch operation and gear changing operation in a manual transmission provided with a clutch, etc.

Further, the electric motor 37 connected to the output shaft 36 of the transmission 35 comprises a drive power generating apparatus for generating a drive power separate from the drive power of the engine. In the embodiment shown in Fig. 1, the electric motor 37 is comprised of an AC synchronous electric motor provided with a rotor 38 attached on the output shaft 36 of the transmission 35 and comprised of a plurality of permanent magnets attached to its outer circumference and a stator 38 comprised of an exciting coil forming a rotating field. The exciting coil of the stator 39 is connected to a motor drive control circuit 40. The motor drive control circuit 40 is connected to a battery 41 generating a DC high voltage.

The electronic control unit 50 is comprised of a digital computer and is provided with a ROM (read only memory) 52, a RAM (random access memory) 53, a CPU (microprocessor) 54, an input port 55, and an output port 56, connected to each other by a bidirectional bus 51. The output signals of the air flow meter 18, and fuel pressure sensor 34 are input through the corresponding AD converters 57 to the input port 55. Inside the exhaust manifold 22 and the exhaust pipe 26 are arranged air fuel ratio sensors 43a, 43b, respectively. The output signals of the sensors 43a, 43b are input through the corresponding AD converters 57 to the input port 55. Further, various signals expressing a gear ratio of the transmission 35, a rotational speed of the output shaft 36, etc. are input to the input port 55.

On the other hand, an accelerator pedal 44 has connected to it a load sensor 45 for generating an output voltage proportional to the amount of depression L of the accelerator pedal 44. The output voltage of the load sensor 45 is input through the corresponding AD converter 57 to the input port 55. Further, the input port 55 has connected to it a crank angle sensor 46 for generating an output pulse each time the crankshaft rotates by for example 30°. On the other hand, the output port 56 is connected through the corresponding drive circuits 58 to the fuel injector 6, stepping motor 20, EGR control valve 28, fuel pump 33, transmission 35, and motor drive control circuit 40.

The supply of power to the exciting coil of the stator 39 of the electric motor 37 is normally stopped. At that time, the rotor 38 rotates together with the output shaft 36 of the transmission 35. On the other hand, when driving the electric motor 37, the DC high voltage of the battery 41 is converted by the motor drive control circuit 40 to a three-phase alternating current having a frequency fm and a current value Im. This three-phase alternating current is supplied to the exciting coil of the stator 39. The frequency fm is the frequency required for making the rotating field generated by the exciting coil rotate in synchronization with the rotation of the rotor 38. The frequency fm is calculated by the CPU 54 based on the rotational speed of the output shaft 36. In the motor drive control circuit 40, this frequency fm is made the frequency of a three-phase alternating current.

On the other hand, the output torque of the electric motor 37 is substantially proportional to the current value Im of the three-phase alternating current. The current value Im is calculated by the CPU 54 based on the requested output torque of the electric motor 37. In the motor drive control circuit 40, this current value Im is made the current value of the three-phase alternating current.

Further, when the electric motor is in a state of driven by outside force, the electric motor 37 operates as a generator. The electric power generated at that time is stored in the battery 41. whether or not the electric motor 37 should be driven by outside force is judged by the CPU 54. When it is judged that the electric motor 37 is to be driven by outside force, the motor drive control circuit 40 operates so that the electric power generated by the electric motor 37 is stored in the battery 41.

Fig. 3 shows another embodiment of a compression ignition type engine. In this embodiment, the electric motor 37 is connected to the output shaft 47 of the engine. The transmission 35 is connected to the output shaft of the electric motor 37. In this embodiment, the rotor 38 of the electric motor 37 is attached to the output shaft 47 of the engine. Therefore, the rotor 38 rotates together with the output shaft 47 of the engine at all times. Further, in this embodiment as well, as the transmission 35, it is possible to use an ordinary automatic transmission provided with a torque converter, various types of variable speed transmissions, or an automatic transmission of a type enabling automatic clutch operation and gear changing operation in a manual transmission provided with a clutch, etc.

Next, the control of the engine body and electric motor of this embodiment will be explained. In the following explanation, note that an engine air fuel ratio means a ratio of the amount of the air supplied to the combustion chamber to the amount of the fuel supplied to the combustion chamber. An exhaust air fuel ratio means an air fuel ratio of the exhaust gas. The air fuel ratio of the exhaust gas means a ratio of the amount of the air supplied to the combustion chamber (in a system wherein an air can be supplied to the exhaust passage of the engine, the amount of the air supplied to the exhaust passage is included) to the amount of the fuel supplied to the combustion chamber (in a system wherein a fuel can be supplied to the exhaust passage of the engine, the amount of the fuel supplied to the exhaust passage is included).

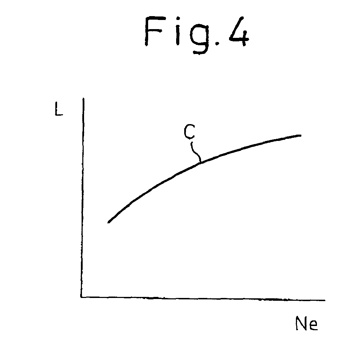

There are combinations of the engine speed and the engine load to output a certain output value. However, among the combinations, there is a combination to make the fuel consumption of the engine smallest as possible. There is a relationship to make the fuel consumption of the engine smallest as possible between the engine speed Ne and the engine load L as shown by a curve (hereinafter, referred to as smallest fuel consumption curve) C in Fig. 4. Therefore, in this embodiment, a point is selected from points on the smallest fuel consumption curve C shown in Fig. 4 so that the nearest output to the requested output is generated. Then, the engine speed and engine load at this point is made target values to control the operation of the engine body 1. When the engine speed and engine load of the engine body 1 reach the corresponding target values and at that time, for example, the output of the engine body 1 does not reach the requested output, the electric motor 37 is driven to supplement the shortage of the output of the engine body 1 relative to the requested output by the output of the electric motor 37. On the other hand, when the output of the engine body 1 exceeds the requested output, the motor 37 is driven as a generator by the output of the engine body 1 to store the excess output in the battery 41 as an electric power.

In this way, according to this embodiment, the fuel consumption of the engine is made smallest, and totally, the requested output is output.

In this embodiment, the NOₓ purification catalyst 24 is arranged in the engine exhaust passage. The catalyst 24 comprises a NOₓ absorbent which adsorbs NOₓ included in the exhaust gas if the air fuel ratio of the exhaust gas flowing into the catalyst 24 is lean relative to the stoichiometric air fuel ratio, and which releases the NOₓ absorbed therein and purifies the released NOₓ by the hydrocarbon included in the exhaust gas if the air fuel ratio of the exhaust gas flowing into the catalyst 24 becomes stoichiometric or rich relative thereto.

in this embodiment, the engine is normally operated such that the engine air fuel ratio is lean relative to stoichiometric in the almost all engine operations. Therefore, the NOₓ purification catalyst 24 continues to absorb the NOₓ and, at last, the amount of the NOₓ absorbed in the catalyst 24 reaches an upper limit which the catalyst 24 can absorb. In this case, since the NOₓ in the exhaust gas is not absorbed in the catalyst 24 any more, the NOₓ flows out to the downstream of the catalyst 24. Therefore, before the amount of the NOₓ absorbed in the catalyst 24 (hereinafter, referred to as absorbed NOₓ amount) exceeds an allowable limit, the air fuel ratio of the exhaust gas flowing into the catalyst 24 is made rich to release the NOₓ from the catalyst 24. For example, this is accomplished by temporarily making the engine air fuel ratio rich.

However, this has a problem in view of the fuel consumption of the engine. That is, in order to maintain the fuel consumption small, it is preferred to cause the engine body 1 to be operated at the lean engine air fuel ratio rather than the rich engine air fuel ratio. Therefore, if the engine body 1 is temporarily operated at the rich engine air fuel ratio, the fuel consumption at least becomes small.

Therefore, this embodiment prevents the fuel consumption of the engine from becoming large by operating the engine body 1 according to the followings to maintain the fuel consumption small when the NOₓ should be released from the NOₓ purification catalyst 24. That is, in order to make the engine air fuel ratio rich, the smaller the amount of the air flowing into the combustion chamber 5 (hereinafter, referred to as intake air amount), the smaller the amount of the fuel required to make the engine air fuel ratio rich, and thus, when the engine air fuel ratio should be made rich, this embodiment decreases the intake air amount, preferably, to a lower limit within the range in which the engine body 1 can continue to operate, and, in addition to the fuel injection to operate the engine, injects the fuel at the latter half of the engine power stroke or the engine exhaust stroke. According to this, the engine air fuel ratio may be made rich by the smallest amount of the fuel, and thus, the fuel consumption is kept small. Of course, in the above explained control, the engine air fuel ratio may be made rich by increasing the amount of the fuel injected at the engine compression stroke for operating the engine.

Further, according to this embodiment, the shortage of the output of the engine body 1 relative to the requested output is supplemented by the output of the electric motor 37 while the intake air amount is decreased and the engine air fuel ratio is made rich as explained above. That is, when the intake air amount is decreased to make the engine air fuel ratio rich, the output of the engine body 1 is decreased, and thus, does not reach the requested output. According to this embodiment, the amount of the decrease of the output of the engine body 1 is supplemented by the output of the electric motor 37. Thereby, even if the intake air amount is decreased to release the NOₓ from the NOₓ purification catalyst 24, the requested output may be totally output.

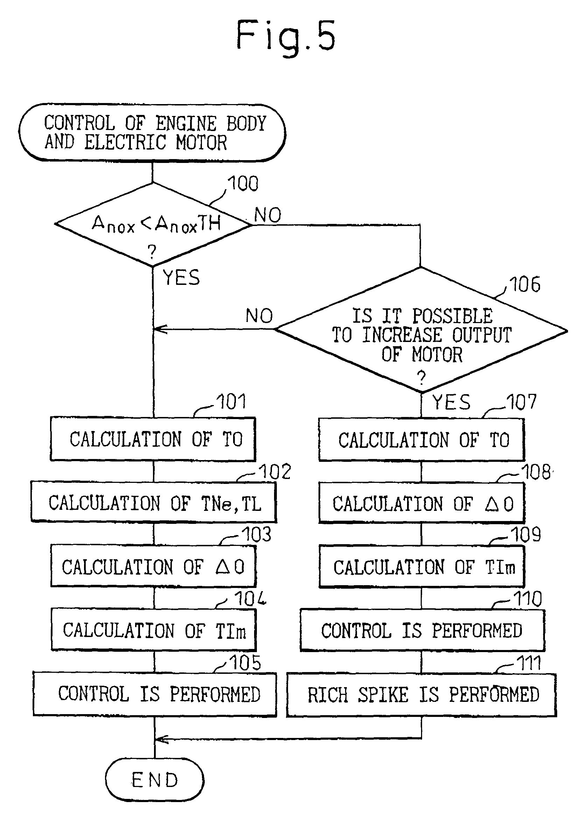

Next, a control of the engine body and electric motor of this embodiment will be explained, referring to the flowchart shown in Fig. 5. In the flowchart of Fig. 5, at step 100, it is judged if the adsorbed NOₓ amount Aₙₒₓ is smaller than a predetermined threshold AₙₒₓTH (Aₙₒₓ < AₙₒₓTH). For example, the threshold AₙₒₓTH is set to a value smaller than the amount of NOₓ which the NOₓ purification catalyst 24 may maximally absorb.

At step 100, when it is judged that Aₙₒₓ < AₙₒₓTH, the routine proceeds to step 101 and steps following step 101 to perform a normal control. That is, at step 101, the requested output OT is calculated, and then, at step 102, the target engine speed TNe and the target engine load TL of the engine body 1 are calculated from the relationship shown in Fig. 4 on the basis of the requested output, and then, at step 103, the difference ΔO between the requested output and the output of the engine body 1 is calculated. Next, at step 104, the target amount TIm of the current supplied to the electric motor 37 is calculated on the basis of the output difference ΔO calculated at step 103. When the output difference ΔO is positive, that is, the output of the engine body 1 is smaller than the requested output, the target current amount TIm is positive, which becomes large when the output difference ΔO becomes large. On the other hand, when the output difference ΔO is negative, that is, the output of the engine body 1 is larger than the requested output, the target current amount TIm is zero.

Next, at step 105, the fuel injector 6, throttle valve 21, and EGR control valve 29 are controlled such that the engine speed and the engine load of the engine body 1 become the target values TNe and TL, respectively, and, at the same time, the target amount TIm of the current is supplied to the electric motor 37. When the target current amount TIm is zero, the electric motor 37 serves as a generator, and thus, the excess output of the engine body 1 is stored as an electric power in the battery 41.

On the other hand, when it is judged that Aₙₒₓ ≧ Aₙₒₓ TH at step 100, the routine proceeds to step 106. At step 106, it is judged if it is possible to increase the output of the electric motor 37. When it is judged that it is not possible to increase the output of the electric motor 37 at step 106, the normal control is performed at step 101 and the steps following step 101. On the other hand, when it is judged that it is possible to increase the output of the electric motor 37 at step 106, a control for releasing the NOₓ from the NOₓ purification catalyst is performed at step 107 and steps following step 107.

That is, at step 107, the requested output TO is calculated. Then, at step 108, the difference ΔO between the requested output TO and the output of the engine body 1 when the intake air amount is decreased at the later step is calculated. Then, at step 109, the target amount TIm of the current to be supplied to the electric motor 37 is calculated on the basis of the output difference ΔO calculated at step 108. When the output difference ΔO is positive, the target current amount TIm is positive, which becomes large when the output difference ΔO becomes large. On the other hand, when the output difference ΔO is negative, the target current amount TIm is zero.

Next, at step 110, the throttle valve 21 is fully closed such that the intake air amount is decreased, for example, to the minimum, and the amount of the fuel corresponding to the intake air amount is injected from the injector 6. At that time, the EGR control valve 29 is, for example, fully opened. Note that, at that time, the engine air fuel ratio is near the stoichiometric air fuel ratio.

Next, at step 111, the rich spike is performed. That is, a small amount of the fuel is injected at the engine power stroke or engine exhaust stroke to make the exhaust air fuel ratio rich. According to this, the NOₓ is released from the NOₓ purification catalyst 24, and the released NOₓ is purified by the hydrocarbon included in the exhaust gas.

Alternatively, at step 110, the throttle valve 21 is fully closed and, then, the fuel is injected to operate the engine body 1, and just thereafter, while the piston 4 is moved by the inertial force, the rich spike is performed. According to this, the fuel consumption of the engine may be kept much small.

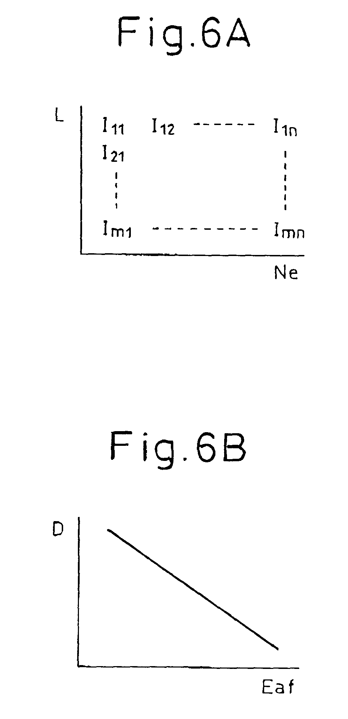

Lastly, a method of calculating the NOₓ absorbing amount will be briefly explained. The amount of the NOₓ flowing into the NOₓ purification catalyst 24 is equal to the amount of the NOₓ discharged from the engine per unit time when the engine is operated (hereinafter, referred to as discharged NOₓ amount). The larger the engine load, the larger the discharged NOₓ amount. Further, the larger the engine speed, the larger the discharged NOₓ amount. Further, the discharged NOₓ amount changes in accordance with the engine air fuel ratio. In the above explained embodiment, the engine air fuel ratio is determined on the basis of the engine speed and engine requested load, and therefore, the discharged NOₓ amount may be found on the basis of the engine speed and engine requested load. Therefore, the discharged NOₓ amount is previously found by an experiment and, then, addition coefficients I corresponding to each discharged NOₓ amount are memorized in the form of a map shown in Fig. 6(A) as a function of the engine load and the engine speed. Then, when the engine is operated at a lean air fuel ratio, the addition coefficients I are read out at a constant time interval on the basis of the engine speed and requested engine load, and the addition coefficients I are integrated.

On the other hand, when the engine is operated at a stoichiometric or rich air fuel ratio, the larger the degree of the rich air fuel ratio of the exhaust gas flowing into the NOₓ purification catalyst 24, the larger the amount of the NOₓ released from the NOₓ purification catalyst 24 per time unit (hereinafter, referred to as released NOₓ amount). Therefore, the released NOₓ amount is previously found by an experiment and, then, subtraction coefficients D corresponding to each released NOₓ amount are memorized in the form of a map shown in Fig. 6(B) as a function of the exhaust air fuel ratio. Then, when the engine is operated at a stoichiometric or rich air fuel ratio, the subtraction coefficients D are read out at a constant time interval on the basis of the exhaust air fuel ratio, and the subtraction coefficients D are subtracted from the integration of the addition coefficients I.

Thus calculated value of the integration of the addition and subtraction coefficients I and D corresponds to the amount of the NOₓ absorbed in the NOₓ purification catalyst 24, and therefore, the amount of the NOₓ absorbed in the NOₓ purification catalyst 24 may be found exactly on the basis of the calculated value.

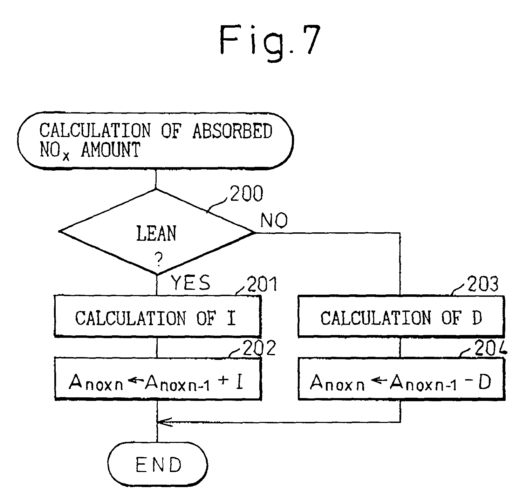

Fig. 7 shows a flowchart of performing the above explained method of calculating the absorbed NOₓ amount. In Fig. 7, at step 200, it is judged if the exhaust air fuel ratio is lean. When it is judged that the exhaust air fuel ratio is lean at step 200, the routine proceeds to step 201 where an addition coefficient I is calculated from the map shown in Fig. 6(A), and then, at step 202, the addition coefficient I is added to the absorbed NOₓ amount Aₙₒₓₙ₋₁ which is calculated at the last routine.

On the other hand, when it is judged that the exhaust air fuel ratio is rich at step 200, the routine proceeds to step 203, a subtraction coefficient D is calculated from the map shown in Fig. 6(B) and, then, at step 204, the subtraction coefficient D is subtracted from the absorbed NOₓ amount Aₙₒₓₙ₋₁ which is calculated at the last routine.

While the invention has been described by reference to specific embodiments chosen for purposes of illustration, it should be apparent that numerous modifications could be made thereto by those skilled in the art without departing from the basic concept and scope of the invention.

There is provided a control device for controlling an engine operation such that the engine is operated at a predetermined fuel consumption in accordance with a requested output. The engine comprises an electric motor and an exhaust gas purification catalyst. When an air fuel ratio of an exhaust gas should be made rich to restore an ability of purification of the catalyst, the device controls the motor operation such that the air fuel ratio of the exhaust gas is made rich while the engine output is caused to be decreased and the shortage of the engine output relative to the requested output is supplemented by the motor output to totally output the requested output.

## Claims

1. A control device for controlling an operation of an engine such that the engine is operated at a predetermined fuel consumption in accordance with a requested output, the engine comprising an electric motor and an exhaust gas purification catalyst arranged in an exhaust passage of the engine for purifying components included in an exhaust gas wherein, when the engine is operated at a predetermined fuel consumption and the output of the engine does not reach a requested output, the control device controls an operation of the electric motor such that the shortage of the output of the engine relative to the requested output is supplemented by an output of the electric motor to totally output the requested output and, on the other hand, when the engine is operated at a predetermined fuel consumption and the output of the engine exceeds the requested output, the control device controls the operation of the electric motor such that the excess output of the engine relative to the requested output is stored as an electric power to totally output the requested output and, further, when an air fuel ratio of an exhaust gas should be made rich to restore an ability of purification of the catalyst, the control device controls the operation of the electric motor such that the air fuel ratio of the exhaust gas is made rich while the output of the engine is caused to be decreased and the shortage of the output of the engine relative to the requested output is supplemented by the output of the electric motor to totally output the requested output.

2. A control device set forth in claim 1 wherein, when the air fuel ratio of the exhaust gas should be made rich to restore the ability of purification of the catalyst, the control device controls the operation of the engine such that the operation of the engine is stopped just after the output of the engine is caused to be decreased and, shortly thereafter, the air fuel ratio of the exhaust gas is made rich.

3. A control device as set forth in claim 1, wherein the catalyst comprises a NOₓ absorbent which absorbs a NOₓ included in the exhaust gas if the air fuel ratio of the exhaust gas flowing into the catalyst is lean and which releases the absorbed NOₓ if the air fuel ratio of the exhaust gas flowing into the catalyst becomes stoichiometric or rich.
